# EUROPÄISCHE PATENTANMELDUNG

(11) **EP 4 079 202 A1**
(43) Veröffentlichungstag der Anmeldung: **26.10.2022**
(21) Anmeldenummer: 22169159.5
(22) Anmeldetag: 21.04.2022
(51) Int. Cl.: A47J 37/07

(54) **GRILLVORRICHTUNG ZUM GRILLEN VON GRILLGUT**

(30) Priorität: 22.04.2021 DE 102021204035
(71) Anmelder: Schloßnikel/Neubauer GbR, 83730 Fischbachau (DE)
(72) Erfinder: SCHLOßNIKEL, Michael, 83730 Fischbachau (DE); NEUBAUER, Johann-Sebastian, 85570 Markt Schwaben (DE)
(74) Vertreter: Mathys & Squire

(57) **Zusammenfassung**

Die vorliegende Erfindung betrifft eine Grillvorrichtung (10) zum Grillen von Grillgut (G), aufweisend eine Grilleinheit (20) mit wenigstens eine Heizquelle (22) mit wenigstens einer Heizrichtung (HR1, HR2) und einen Rahmen (30), wobei die Grilleinheit (20) im Rahmen (30) drehbar zwischen einer ersten Grillposition (GP1) und wenigstens einer zweiten Grillposition (GP2) bewegbar gelagert ist, weiter aufweisend ein Fixiermittel (40) zum Fixieren der Grilleinheit (20) in der jeweiligen Grillposition (GP1, GP2), wobei der Rahmen (30) einen Aufnahmeabschnitt (32) mit wenigstens einer Aufnahmeschiene (33) für eine reversible Aufnahme eines Grillrostes (50) aufweist.

## Beschreibung

Die vorliegende Erfindung betrifft eine Grillvorrichtung zum Grillen von Grillgut sowie ein Verfahren für einen Wechsel einer Grillposition bei einer Grillvorrichtung.

Es ist bekannt, dass Grillvorrichtungen Grilleinheiten mit wenigstens einer Heizquelle aufweisen, um Grillgut zu grillen. Eine solche Heizquelle kann beispielsweise mittels Grillkohle, Gas oder elektrisch betrieben werden. Die bekannten Grillvorrichtungen weisen die Grilleinheiten üblicherweise in einer statisch fest definierten Positionierung auf. So sind Holzkohlegrills bekannt, welche zum Beispiel in kugelförmiger Bauweise Holzkohle aufnehmen können. Ein über dieser Holzkohle angeordneter Grillrost erlaubt es, Grillgut in der Heizrichtung oberhalb der Heizquelle anzuordnen. Auch für andere Heizquellen, beispielsweise Gasheizquellen, sind Grillvorrichtungen bekannt. Auch hier ist immer eine feste Ausrichtung der Heizrichtung der Heizquelle gegeben, sodass innerhalb dieser Heizrichtung ein Grillrost für die Anordnung von Grillgut zur Verfügung gestellt werden kann.

Nachteilhaft bei den bekannten Lösungen ist es, dass diese hinsichtlich der Grillfunktionalität auf eine einzige Positionierung beschränkt sind. Dies ist üblicherweise eine horizontale Ausrichtung eines Grillrostes, sodass auf diesen Grillrost das gewünschte Grillgut zum Grillen gelegt werden kann. Eine flexible Ausgestaltung, beispielsweise einer variierten Beabstandung zwischen Grillgut und Heizquelle, aber auch für unterschiedliche Relativpositionierungen zwischen der Heizquelle und dem Grillgut, sind bisher nicht bekannt. Vielmehr müssen, insbesondere beim Wunsch anderer Relativpositionierungen, separate Grillvorrichtungen verwendet werden.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Grillvorrichtung mit möglichst großer Variabilität für unterschiedliche Grillsituationen einsetzbar zu machen.

Die voranstehende Aufgabe wird gelöst, durch eine Grillvorrichtung mit den Merkmalen des Anspruchs 1 sowie ein Verfahren mit den Merkmalen des Anspruchs 17. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Grillvorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Es wird vorgeschlagen, dass die Grillvorrichtung zum Grillen von Grillgut eine Grilleinheit mit wenigstens einer Heizquelle mit wenigstens einer Heizrichtung aufweist. Weiter ist ein Rahmen vorgesehen, wobei die Grilleinheit im Rahmen drehbar zwischen einer ersten Grillposition und wenigstens einer zweiten Grillposition bewegbar gelagert ist. Weiter weist eine solche Grillvorrichtung Fixiermittel zum Fixieren der Grilleinheit in der jeweiligen Grillposition auf. Dabei ist der Rahmen mit einem Aufnahmeabschnitt mit wenigstens einer Aufnahmeschiene für eine reversible Aufnahme eines Grillrostes ausgestattet.

Erfindungsgemäß ist die Grillvorrichtung nun dahingehend variabel, dass wenigstens zwei unterschiedliche Grillpositionen eingenommen werden können. Um diese Grillpositionen einzunehmen, ist die Grilleinheit, welche die Heizquelle aufweist, drehbar zwischen der ersten und der zweiten Grillposition bewegbar gelagert. Dabei kann es sich um eine schwenkende Drehbewegung oder um eine einfach rotierende Drehbewegung handeln. Die unterschiedlichen möglichen Funktionalitäten einer solchen Grillvorrichtung werden nachfolgend kurz erläutert.

So kann bei einer erfindungsgemäßen Grillvorrichtung nun eine Anpassung an unterschiedliche Grillsituationen zur Verfügung gestellt werden. Beispielsweise kann eine erste Grillposition eingenommen werden, um die Heizrichtung der Heizquelle im Wesentlichen horizontal, also nach links und/oder nach rechts von der Grilleinheit, auszurichten. Diese Ausrichtung erlaubt es, das Grillgut seitlich neben der Grilleinheit anzuordnen, sodass beispielsweise rotierbares Grillgut, beispielsweise Hähnchen oder Ähnliches, neben der Grilleinheit angeordnet und gegrillt werden kann. Alternativ kann die Grilleinheit auch in die andere Grillposition bewegt werden, in welcher beispielsweise eine horizontale Ausrichtung der Grilleinheit mit einer vorzugsweise vertikalen Ausrichtung der Heizrichtung eingenommen werden kann. In dieser anderen Grillposition ist eine klassische Grillsituation gegeben, in welcher beispielsweise der Grillrost oberhalb der Grilleinheit in der vertikal ausgerichteten Heizrichtung angeordnet wird, um Grillgut auf dem Grillrost aufzulegen und in klassischer Weise zu grillen.

Wie aus der voranstehenden Erläuterung ersichtlich wird, kann nun die Grillvorrichtung für unterschiedliche Grillfunktionen eingesetzt werden, welche mit unterschiedlichen Relativpositionierungen zwischen dem Grillgut und der Heizquelle einhergehen. So ist ein seitliches Grillen von beispielsweise rotierfähigem Grillgut, ein klassisches Grillen von auflagefähigem Grillgut auf einem Grillrost oder auch ein schräges Grillen, beispielsweise von auf einem Stecken angeordnetem Fisch, mit der gleichen Grillvorrichtung möglich.

Neben der Variabilität für unterschiedliche Grillsituationen kann zumindest eine der Grillpositionen auch, wie dies später noch erläutert wird, eine Ausrichtung aufweisen, welche eine maximierte Kompaktheit der Grillvorrichtung mit sich bringt. In dieser Grillposition, welche auch als Transportposition bezeichnet werden kann, ist die Grillvorrichtung maximal kompaktiert und kann dementsprechend einfach transportiert werden.

Es ist dabei noch darauf hinzuweisen, dass bei einer erfindungsgemäßen Grillvorrichtung jede Form einer Heizquelle einsetzbar sein kann. So kann als Heizquelle beispielsweise Grillkohle eingesetzt werden, sodass die Heizquelle einen entsprechenden Aufnahmeraum und/oder eine Aufnahmeschale aufweist, um die Grillkohle in der gewünschten Heizposition zu halten. Auch ist es möglich, dass die Heizquelle Gasaustritte aufweist, um eine gasgeführte Flamme zur Verfügung zu stellen und eine Gasgrillfunktionalität zu ermöglichen. Selbstverständlich kann die erfindungsgemäße Funktionalität auch bei einem Elektrogrill mit einer Heizquelle als elektrische Heizung verwendet werden. Auch Kombinationen unterschiedlicher Heizquellen in ein und derselben Grilleinheit oder eine austauschfähige Grilleinheit für unterschiedliche Heizquellen in der Grillvorrichtung sind im Rahmen der vorliegenden Erfindung möglich.

Die einzelnen Grillpositionen sind, wie dies bereits erläutert worden ist, den unterschiedlichen Grillfunktionen zugeordnet und unterscheiden sich insbesondere in ihrer Relativpositionierung zum Rahmen voneinander. So sind die einzelnen Grillpositionen vorzugsweise voneinander winklig unterscheidbar, insbesondere durch eine vertikale und/oder horizontale Ausrichtung der Grilleinheit in der jeweiligen Grillposition.

Der beschriebene Grillrost ist dabei, insbesondere in reversibler Form, Teil der Grillvorrichtung und kann vorzugsweise auf verschiedenen Grillhöhen über verschiedene Aufnahmeschienen im Aufnahmeabschnitt des Rahmens angeordnet werden. Wird ein seitliches Grillen, beispielsweise mit einem rotierbaren Grillgut, gewünscht, kann der Grillrost auch vollständig entfernt werden. Vorzugsweise ist der Grillrost in seinen geometrischen Abmessungen an Seitenwände angepasst, sodass er insbesondere kleiner oder gleich groß wie die Oberfläche der Grilleinheit ist, sodass der Grillrost im Falle einer Transportfunktionalität ebenfalls innerhalb des Rahmens positioniert werden kann.

Neben einer Unterscheidungsmöglichkeit zwischen unterschiedlichen Grillfunktionen, kann auch bei gleichbleibender Grillfunktionalität durch Veränderung der Grillposition eine Variation zur Verfügung gestellt werden. So kann beispielsweise für eine normale Grillsituation die Grilleinheit horizontal positioniert werden, sodass auf einem darüber angeordneten Grillrost das Grillgut gegart wird. Ist es nun erwünscht, auf dem Grillrost unterschiedliche Hitzezonen zur Verfügung zu stellen, kann eine Rotation der Grilleinheit, beispielweise um 5°, 10°, 15° oder 20°, eine Variation des Abstandes einzelner Bereiche des Grillrostes zur Grilleinheit zur Verfügung stellen. Durch diese Rotationsfähigkeit gelangen also Teilabschnitte der Grilleinheit näher an den Grillrost und andere Teilabschnitte der Grilleinheit werden weiter von diesem entfernt. Entsprechend der Reduktion des Abstandes werden diese Bereiche des Grillrostes heißer und die übrigen weiter beabstandeten Bereiche des Grillrostes kälter. Somit ist ersichtlich, dass nicht nur ein komplettes Umstellen zwischen unterschiedlichen Grillfunktionen, sondern auch eine Hitzevariation bei bestehender Grillsituation zur Verfügung gestellt werden kann.

Vorteilhaft ist es, wenn bei einer erfindungsgemäßen Grillvorrichtung die Heizquelle wenigstens eine der folgenden Ausbildungen aufweist:
- Grillkohleaufnahme,
- Gasbrenner,
- Elektroheizer.

Bei der voranstehenden Aufzählung handelt es sich um eine nicht abschließende Liste. Eine Grillkohleaufnahme kann diese Grillkohle bereits enthalten oder eine entsprechende Aufnahmefunktion für extern zugeführte Grillkohle zur Verfügung stellen. Auch ein Gasbrenner als Heizquelle kann eine Gaskartusche enthalten oder aber einen Anschluss an eine externe Gasquelle. Gleiches gilt für den Elektroheizer, welcher eine elektrische Speichervorrichtung, beispielsweise eine Powerbank, aufweisen kann oder einen entsprechenden Anschluss an ein elektrisches Netz. Auch eine Kombination von unterschiedlichen Heizfunktionalitäten in der Heizquelle ist im Rahmen der vorliegenden Erfindung denkbar.

Weitere Vorteile sind erzielbar, wenn bei einer erfindungsgemäßen Grillvorrichtung die erste Grillposition senkrecht oder im Wesentlichen senkrecht zur zweiten Grillposition ausgerichtet ist. Dabei handelt es sich um maximal konträre Ausrichtungen der Grillpositionen. Eine erste Grillposition in vertikaler Ausrichtung und eine zweite Grillposition in horizontaler Ausrichtung können dabei die bereits beschriebenen Grillsituationen ermöglichen. Bei einer zweiten Grillposition in horizontaler Ausrichtung ist ein klassisches Grillen mit darüber angeordnetem Grillrost möglich, während senkrecht dazu die erste Grillposition vertikal ausgerichtet ist, sodass neben der Grilleinheit das Grillgut, insbesondere in rotierbarer Weise, angeordnet werden kann. Die horizontale und/oder senkrechte Ausgestaltung und Ausrichtung der Grillposition bezieht sich dabei vorzugsweise auf die entsprechende Aufstellsituation der Grillvorrichtung. Dabei ist noch darauf hinzuweisen, dass vorzugsweise die Heizrichtung der Grilleinheit ebenfalls senkrecht zur Haupterstreckung der Grilleinheit ausgerichtet ist.

Weitere Vorteile sind erzielbar, wenn bei einer erfindungsgemäßen Grillvorrichtung die Grilleinheit in wenigstens eine Transportposition bewegbar ist, welche insbesondere einer Grillposition entspricht, in welcher die Grilleinheit vollständig oder im Wesentlichen vollständig von dem Rahmen umschlossen ist. Der Rahmen ist vorzugsweise so ausgestaltet, dass er die gewünschte Drehbarkeit der Grilleinheit freigibt. Bevorzugt ist der Rahmen mit Freiräumen ausgestaltet, sodass die Grilleinheit vollständig oder im Wesentlichen vollständig, also um 360° oder im Wesentlichen um 360°, rotierbar gelagert ist. Die Anordnung der Grilleinheit in eine Transportposition führt nun dazu, dass die Grilleinheit in dieser Transportposition von den verbleibenden Rahmenbauteilen vollständig umschlossen wird. Somit bildet der Rahmen die maximal mögliche Kompaktierung der Grillvorrichtung aus und schützt gleichzeitig in dieser Transportposition die Grilleinheit vor mechanischer Beeinträchtigung. In der Nutzung einer Grillvorrichtung führt dies dazu, dass die Grilleinheit nach Beendigung der Grillbenutzung und Erkalten der Grilleinheit in die Transportposition rotiert wird, und auf diese Weise die Grillvorrichtung einfach transportierbar ist. Der Rahmen wird dabei insbesondere durch die später noch erläuterten Seitenwände und/oder entsprechende Tragegriffe verbessert.

Vorteilhaft ist es ebenfalls, wenn bei einer erfindungsgemäßen Grillvorrichtung der Rahmen eine Rotationslagerung für die Grilleinheit aufweist, für eine Ausbildung einer Rotierbarkeit der Grilleinheit um eine Rotationsachse. Diese Rotationsachse ist vorzugsweise symmetrisch zentral in der Grilleinheit ausgerichtet, sodass sich die Grilleinheit um eine zentral in ihr ausgerichtete Rotationsachse rotieren lässt. Eine solche Rotationslagerung ist eine besonders einfache und kostengünstige Lösung, die darüber hinaus eine sehr kompakte Konstruktion der Grillvorrichtung erlaubt. Es ist möglich, dass der Rahmen und/oder die Grilleinheit noch entsprechende Handhabungsmittel aufweisen, beispielsweise ein Drehrad, koaxial mit der Rotationsachse ausgerichtet, um die Rotation der Grilleinheit zwischen den Grillpositionen durchzuführen oder zumindest zu unterstützen. Auch ist es noch möglich, dass die Rotationsachse und die entsprechende Rotationslagerung noch eine translatorische Verschiebbarkeit aufweisen, um eine zusätzliche translatorische Verstellmöglichkeit, beispielsweise in Höhenrichtung, für die Grilleinheit zur Verfügung stellen zu können.

Von Vorteil ist es weiter, wenn bei einer erfindungsgemäßen Grillvorrichtung das Fixiermittel Rastmittel aufweist, für ein Einrasten der Grilleinheit in der jeweiligen Grillposition. Ein solches Einrasten definiert also die Grillpositionen vor. Dies erlaubt es, dass beispielsweise durch einen Lochkreis, ein entsprechend federbelastetes Rastmittel in einer zugehörigen Rastvertiefung einrastet, sobald die Grilleinheit die gewünschte Grillposition erreicht hat. Dies erlaubt ein besonders einfaches und schnelles Verstellen der Grilleinheit zwischen den unterschiedlichen Grillpositionen. Vorzugsweise kann das Rastmittel gegen eine Federbelastung manuell wieder aus der Rastposition herausbewegt werden, um eine Rotierbarkeit der Grilleinheit in eine der anderen Grillpositionen gewährleisten zu können.

Ebenfalls Vorteile kann es mit sich bringen, wenn bei einer erfindungsgemäßen Grillvorrichtung das Fixiermittel wenigstens ein Klemmelement aufweist, für ein Fixieren der Grilleinheit in einer beliebigen oder im Wesentlichen beliebigen Zwischenposition. Diese Variation kann zusätzlich oder alternativ zu dem voranstehend beschriebenen Rastmittel zur Verfügung gestellt sein. So kann beispielsweise eine Scheibe mit einer Klemmfläche und ein Klemmelement mit einer Gegenklemmfläche vorgesehen sein, um eine beliebige und frei wählbare Zwischenposition als Grillposition für die Grilleinheit zu wählen. Über ein Kontaktieren zwischen Klemmelement und Klemmfläche wird diese Zwischenposition fixiert und durch ein Lösen dieser Kontaktierung die Rotationsfähigkeit der Grilleinheit wieder freigegeben.

Ebenfalls von Vorteil ist es, wenn bei einer erfindungsgemäßen Grillvorrichtung die Grilleinheit auf zwei entgegengesetzt ausgerichteten Seiten Auslassbereiche für den Auslass von Hitze der Heizquelle entlang zweier entgegengesetzt ausgerichteter Heizrichtungen aufweist. Beispielsweise kann die Grilleinheit Lochbleche auf beiden Seiten als Auslassbereiche aufweisen, sodass Hitze von der Heizquelle in entgegengesetzter Ausrichtung nach oben und nach unten in der vertikalen Ausrichtung der Grilleinheit oder nach links und rechts in der vertikalen Ausrichtung der Grilleinheit austreten kann. Das Zurverfügungstellen von zwei entgegengesetzt ausgerichteten Heizrichtungen erlaubt eine noch größere Variationsmöglichkeit der Grilleinheit. Auch kann die Grilleinheit mit Reflexionsflächen zur Verfügung gestellt sein, welche es erlauben, eine zweite Heizrichtung durch Reflexion der Wärmestrahlung in Richtung der ersten Heizrichtung umzulenken. Bei vertikal ausgerichteter Grilleinheit, beispielsweise in der ersten Grillposition, kann Grillgut somit auf beiden Seiten der Grilleinheit gegart werden. Bei einer horizontal ausgerichteten Grilleinheit ist, wie dies später noch erläutert wird, auch ein Garen unterhalb der Grilleinheit, also mit einer Art Oberhitze, möglich.

Ebenfalls vorteilhaft ist es, wenn bei einer erfindungsgemäßen Grillvorrichtung die Grilleinheit ein entfernbares Halteblech aufweist für ein Halten von Grillkohle in wenigstens einer der Grillpositionen. Dies gilt insbesondere für eine Ausrichtung der Grilleinheit in waagerechter Weise oder bis zu 45° zur Waagerechten. Das Halteblech erlaubt das Halten der Grillkohle und verhindert das Herausfallen derselben. Auch kann ein solches Halteblech zusätzlich die bereits erläuterte Wärmereflexionsfunktionalität aufweisen, um die maximale Hitze entlang der ersten Heizrichtung abzugeben.

Von Vorteil ist es darüber hinaus, wenn bei einer erfindungsgemäßen Grillvorrichtung der Rahmen und/oder die Grilleinheit auf wenigstens einer Seite Gegen-Haltemittel aufweist, für ein reversibles Befestigen von Haltemitteln für ein seitliches Halten von Grillgut. Wie bereits erläutert worden ist, kann bei einer vertikalen Ausrichtung der Grilleinheit ein seitliches Grillen zur Verfügung gestellt sein. Mit Haltemitteln und Gegen-Haltemitteln wird es nun möglich, das Grillgut sozusagen seitlich in der Schwebe neben der Grilleinheit zu halten. Die Haltemittel können dabei Antriebseinheiten aufweisen, um das Grillgut in einer Rotationsbewegung anzutreiben. Auch statische Haltemittel, beispielsweise für das Grillen von Steckerlfisch, sind hier grundsätzlich möglich. Neben rein statischen Haltemitteln sind auch verstellbare Haltemittel, sowohl hinsichtlich eines verstellbaren Abstandes zur Grilleinheit als auch in vertikaler Höhenrichtung, im Rahmen der vorliegenden Erfindung denkbar.

Weitere Vorteile sind erzielbar, wenn bei einer erfindungsgemäßen Grillvorrichtung der Rahmen Seitenwände aufweist, welche zwischen einer die Grilleinheit umschließenden Kofferposition und einer unter der Grilleinheit angeordneten Auffangposition bewegbar gelagert sind. Wird die Grillvorrichtung transportiert, dienen diese Seitenwände in der Kofferposition zum Schutz der Grilleinheit und zum seitlichen Abschluss der Grillvorrichtung. Die Seitenwände komplettieren also eine kofferartige Ausgestaltung des Rahmens, wobei innerhalb dieser kofferartigen Ausgestaltung die Grilleinheit in geschützter Weise angeordnet ist. Eine Doppelfunktion der Seitenwände ergibt sich durch das Aufklappen in die Auffangposition, um heruntertropfendes Fett vom Grillgut auffangen zu können. Die Bewegung zwischen der Kofferposition und der Auffangposition kann durch einfaches Umstecken zur Verfügung gestellt sein. Jedoch ist es auch möglich, dass über Scharniermittel ein rotierbares Bewegen zwischen Kofferposition und Auffangposition möglich ist. Die Seitenwände können darüber hinaus noch Aufnahmeabschnitte aufweisen, um beispielsweise Grillbesteck, Standfüße für die Grillvorrichtung oder den Grillrost aufnehmen zu können.

Weiter von Vorteil ist es, wenn bei einer erfindungsgemäßen Grillvorrichtung am Rahmen wenigstens ein Handhabungsmittel angeordnet ist, für eine Unterstützung der Handhabung für die Bewegung der Grilleinheit zwischen den Grillpositionen. Ein solches Handhabungsmittel kann beispielsweise ein Handgriff oder ein Handrad sein, um die Rotation, insbesondere um die beschriebene Rotationsachse, durchführen zu können. Das Handhabungsmittel kann dabei in wärmeisolierter Weise ausgebildet sein, sodass eine Wärmeisolation zur Grilleinheit zur Verfügung gestellt ist. Dies erlaubt es, zwischen unterschiedlichen Grillpositionen auch im heißen Zustand der Heizquelle umstellen zu können. Ein solches Handhabungsmittel kann beispielsweise vollständig oder zumindest teilweise mit dem Fixiermittel gemeinsam ausgebildet sein.

Weitere Vorteile kann es mit sich bringen, wenn bei einer erfindungsgemäßen Grillvorrichtung der Rahmen Fußaufnahmen aufweist, für ein reversibles Aufnehmen von Standfüßen. Diese Standfüße sind vorzugsweise Teil der Grillvorrichtung und können für den Transport im Rahmen, beispielsweise in den genannten Seitenwänden, verstaut werden. Um eine gewünschte vorteilhafte und komfortable Arbeitshöhe für die Grillvorrichtung gewährleisten zu können, können diese Standfüße teleskopartig oder mehrteilig verschraubt ausgebildet sein. Auch eine Höhenverstellbarkeit kann für die Standfüße und/oder die Fußaufnahmen gewährleistet sein.

Ebenfalls Vorteile bringt es mit sich, wenn bei einer erfindungsgemäßen Grillvorrichtung die Grilleinheit an einer seitlichen Stirnfläche eine Schublade und/oder eine Öffnung aufweist, für einen erleichterten Zugang zur Heizquelle. Beispielsweise kann die Schublade aus der Grilleinheit herausgezogen werden, um Grillkohle hineinzufüllen, diese anzuzünden und/oder die Heizquelle zu säubern. Auch ein Anschluss einer Gasquelle oder eines Stromanschlusses ist durch eine solche Schubladenfunktion oder eine einfache seitliche Öffnung verbessert. Auch kann durch eine entsprechende Öffnung ein Kamineffekt zur Verfügung gestellt werden, welcher die Hitzeentwicklung der Heizquelle bei der Verwendung von Grillkohle oder Gas als Heizmittel deutlich verstärkt.

Weitere Vorteile bringt es mit sich, wenn bei einer erfindungsgemäßen Grillvorrichtung der Rahmen einen Deckel aufweist, welcher reversibel luftdicht oder im Wesentlichen luftdicht den Rahmen abschließt. Darunter ist insbesondere zu verstehen, dass die bereits beschriebenen Seitenwände ein luftdichtes oder im Wesentlichen luftdichtes Abschließen zusammen mit dem Deckel gewährleisten. Noch vorhandene Glut bei Verwendung von Grillkohle, wird auf diese Weise erstickt, sodass ein schnelles Beenden des Grillens möglich wird. Vorzugsweise sind Rahmen, Deckel und die beschriebenen Seitenwände aus Metallmaterial ausgebildet. Der Deckel kann darüber hinaus einen Handgriff aufweisen, welcher den Transport der geschlossenen Grillvorrichtung noch weiter erleichtert.

Ebenfalls vorteilhaft ist es, wenn bei einer erfindungsgemäßen Grillvorrichtung in wenigstens einer Grillposition unterhalb und oberhalb der Grilleinheit Aufnahmeschienen für die reversible Aufnahme von Grillrosten ausgebildet sind. Solche Aufnahmeschienen dienen dazu, den Grillrost in der entsprechenden Position anzuordnen, sodass das Grillgut sich in der gewünschten Grillpositionierung befindet. Unterhalb der Grilleinheit kann also eine Oberhitzefunktion mit der Grillvorrichtung gewährleistet werden.

Ein weiterer Gegenstand der vorliegenden Erfindung ist ein Verfahren für einen Wechsel einer Grillposition bei einer erfindungsgemäßen Grillvorrichtung, aufweisend die folgenden Schritte:
- Lösen der Fixierung der Grilleinheit mittels des Fixiermittels,
- Bewegen der Grilleinheit in eine andere Grillposition,
- Ausbilden der Fixierung der Grilleinheit in der anderen Grillposition mittels des Fixiermittels.

Ein erfindungsgemäßes Verfahren bringt damit die gleichen Vorteile mit sich, wie sie ausführlich mit Bezug auf eine erfindungsgemäße Grillvorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Grillvorrichtung,
- Fig. 2: die Ausführungsform der Figur 1 in seitlicher Darstellung,
- Fig. 3: die Ausführungsform der Figuren 1 und 2 in anderer Grillposition,
- Fig. 4: die Ausführungsform der Figur 3 in seitlicher Darstellung,
- Fig. 5: eine Ausführungsform einer Grilleinheit,
- Fig. 6: eine weitere Ausführungsform einer Grilleinheit,
- Fig. 7: die Ausführungsform der Figuren 1 bis 4 in weiterer Grillposition,
- Fig. 8: die Ausführungsformen der Figuren 1 bis 4 und 7 in weiterer Grillposition,
- Fig. 9: eine weitere Ausführungsform einer Grillvorrichtung,
- Fig. 10: eine Möglichkeit eines Fixiermittels,
- Fig. 11: eine weitere Möglichkeit eines Fixiermittels,
- Fig. 12: eine erfindungsgemäße Grillvorrichtung im Transport in Kofferposition,
- Fig. 13: eine mögliche Ausführungsform einer Grilleinheit,
- Fig. 14: eine weitere Ausführungsform einer erfindungsgemäßen Grillvorrichtung.

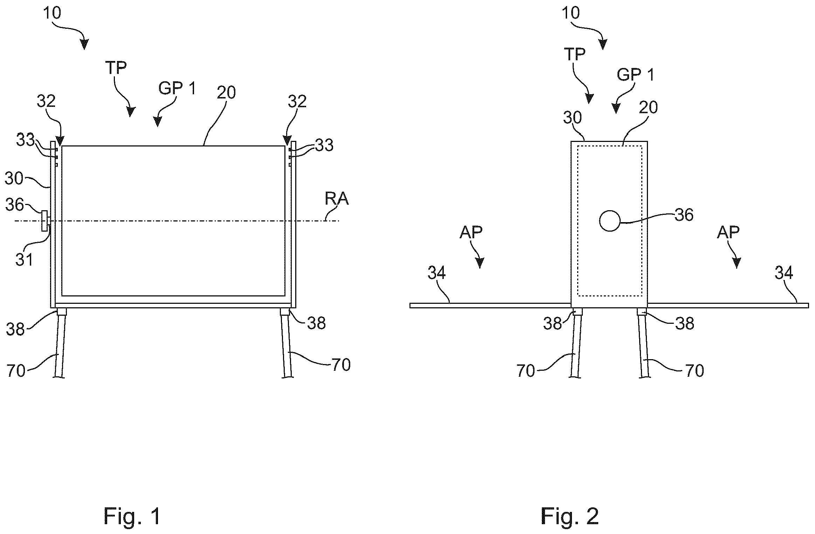

In den Figuren 1 und 2 ist schematisch eine Grillvorrichtung 10 dargestellt. Diese ist in aufgebautem Zustand abgebildet, also mit einem Rahmen 30 und darin angeordneter Grilleinheit 20. Seitenwände 34 befinden sich hier in der Auffangposition AP in heruntergeklapptem Zustand, sodass entsprechend während des Grillens entstehendes Fett aufgefangen werden kann. An der Unterseite des Rahmens 30 sind hier vier Fußaufnahmen 38 angeordnet, in welche Standfüße 70 eingesteckt sind.

Die Figuren 1 und 2 zeigen die Grilleinheit 20 in Transportposition TP, welche auch eine erste Grillposition GP1 ausbildet. Um eine Bewegbarkeit der Grilleinheit 20 zu gewährleisten, ist hier ein Handhabungsmittel 36 vorgesehen, welches über die Rotationslagerung 31 eine Rotation der Grilleinheit 20 um die Rotationsachse RA ermöglicht. Auch sind hier bereits die Aufnahmeschienen 33 im Aufnahmeabschnitt 32 des Rahmens 30 dargestellt. In der Figur 2 ist gut zu erkennen, wie die Grilleinheit 20 in dieser ersten Grillposition GP1, welche auch die Transportposition darstellt, vertikal ausgerichtet ist.

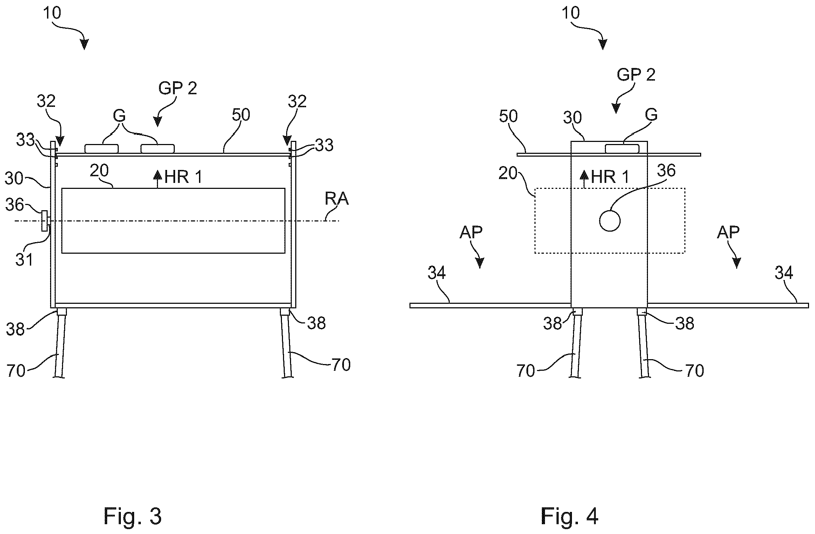

Die Figuren 3 und 4 zeigen die zweite Grillposition GP2 der Ausführungsform der Figuren 1 und 2. Hier wurde mittels des Handhabungsmittels 36 die Grilleinheit 20 um 90° in die Horizontale gedreht, sodass nunmehr die Heizrichtung HR1 nach oben ausgerichtet ist. Nach oben ausgerichtete Heizrichtung HR1 bedeutet, dass oberhalb der Grilleinheit 20 nun der Grillrost 50 hier auf die mittlere Aufnahmeschiene 33 im Aufnahmeabschnitt 32 geschoben worden ist. Auf diesem Grillrost 50 sind nun verschiedene Stücke Grillgut G angeordnet und können mit Hitze entlang der Heizrichtung HR1 von der nicht näher dargestellten Heizquelle 22 der Grilleinheit 20 versorgt werden. Fett, welches vom Grillgut G herabtropft, wird von den Seitenwänden 34 in Auffangposition AP aufgefangen.

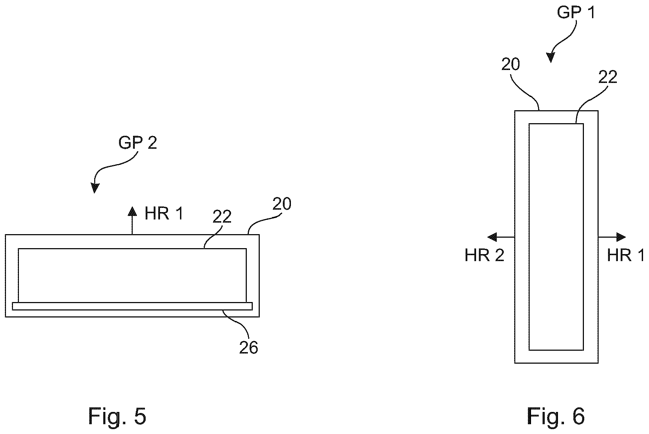

Die Figur 5 zeigt eine weitere Ausführungsform der Grilleinheit 20 in zweiter Grillposition GP2. Hier ist innerhalb der Grilleinheit 20 die Heizquelle 22 dargestellt. Bei dieser Ausführungsform ist beispielsweise eine Nutzung von Grillkohle als Heizmittel vorgesehen und um dies zu gewährleisten ist ein Halteblech 26 unterhalb der Heizquelle 22 angeordnet. In der Figur 6, beispielsweise mit einer Heizquelle 22 in Form einer Gasheizung, ist die vertikale Ausrichtung der Grilleinheit 20 in der ersten Grillposition GP1 dargestellt. Hier ist es nun möglich, links und rechts entlang der Heizrichtungen HR1 und HR2, entsprechend Hitze von der Grilleinheit 20 an seitlich angeordnetes Grillgut G abzugeben.

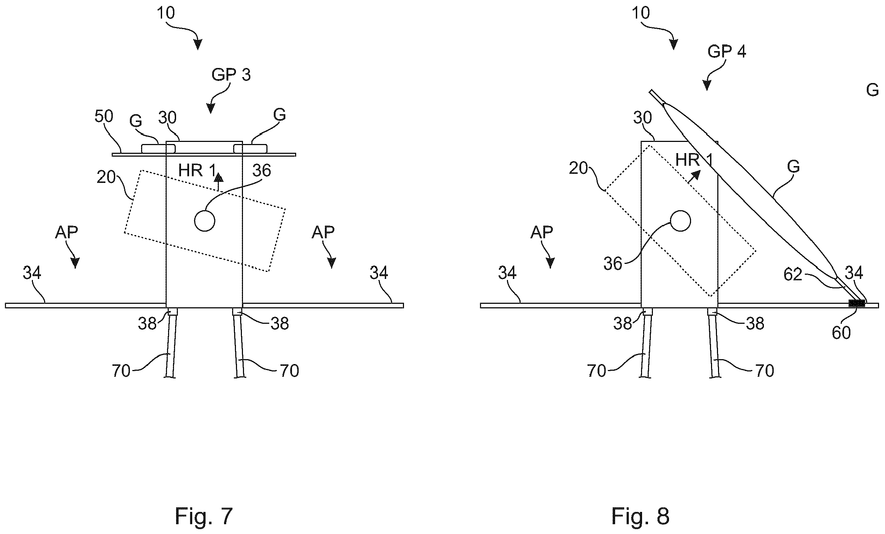

Die Figur 7 zeigt eine Möglichkeit einer dritten Grillposition GP3. Hier wurde ein leichtes Anstellen der Grilleinheit 20 zur Verfügung gestellt, sodass nun das auf dem Grillrost 50 links angeordnete Stück Grillgut G mehr Hitze erhält als das rechts angeordnete Stück Grillgut G. Die unterschiedlichen Abstände zwischen der winklig angestellten Grilleinheit 20 und dem horizontal ausgerichteten Grillrost 50 erlauben eine Variation in unterschiedliche Heizabschnitte auf dem Grillrost 50.

Figur 8 zeigt eine Möglichkeit einer im Wesentlichen 45° ausgerichteten Anstellung der Grilleinheit 20 als vierte Grillposition GP4. Hier können innerhalb der Seitenwände 34 rechts Gegen-Haltemittel 60 vorgesehen sein, welche hier mit einem Haltemittel 62 in Form eines Stockes korrelieren. Das Grillgut G, beispielsweise ein zu grillender Fisch, ist auf dem Haltemittel 62 angeordnet und kann hier in schräger Grillposition mit der gleichen Grillvorrichtung 10 in der vierten Grillposition GP4 für die Grilleinheit 20 gegart werden.

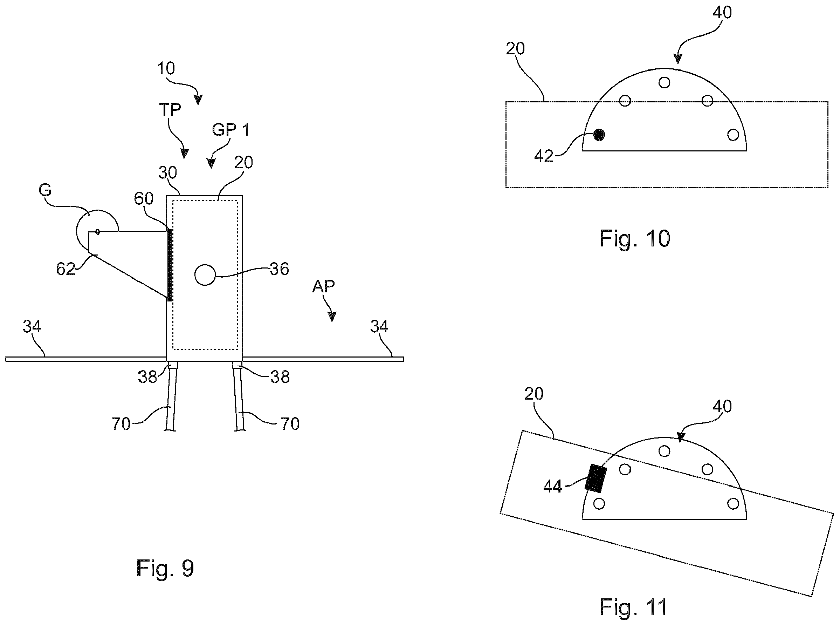

In der Figur 9 ist nochmals eine Variante dargestellt mit der ersten Grillposition GP1. Hier sind seitlich links, selbstverständlich auch rechts möglich, Gegen-Haltemittel 60 und Haltemittel 62 dargestellt, sodass ein rotierbares Grillgut G hier links neben der Grilleinheit 20 angeordnet ist. Hierbei kann es sich beispielsweise um das Grillen von Hähnchen oder Ähnlichem handeln.

Figur 10 zeigt, dass das Fixiermittel 40 für die Grilleinheit 20 beispielsweise mit einem Rastmittel 42 ausgebildet sein kann. Ein Rastbolzen ist dabei an der Grilleinheit 20 angeordnet und kann bei Rotation in eine der Grillpositionen GP1 bis GP4 in der entsprechenden Aufnahme des Fixiermittels 40 im Lochkreis einrasten. Ist dieses Rastmittel 42 federbelastet, kann es gegen die Federbelastung wieder in eine Freigabeposition bewegt werden, sodass eine Weiterrotation der Grilleinheit 20 in eine der anderen Grillpositionen GP1 bis GP4 möglich wird. In der Figur 11 ist eine flexible Zwischenpositionierung der Grilleinheit 20 dargestellt, indem das Fixiermittel 40 ein Klemmelement 44 aufweist. Mit diesem wird es möglich, über einen Klemmabschnitt am Lochkreis des Fixiermittels 40 im Wesentlichen in jeder beliebigen Position eine klemmende Fixierung der Grilleinheit 20 zur Verfügung stellen zu können.

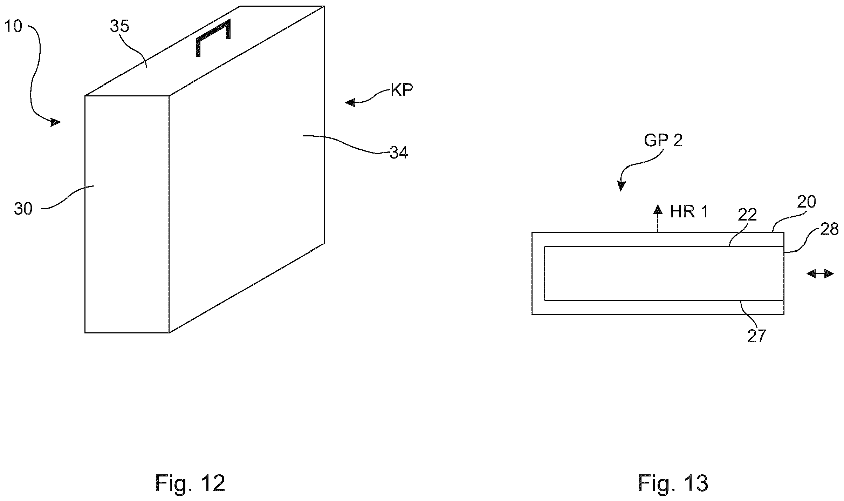

Die Figur 12 zeigt die Kofferposition der Seitenwände 34 sowie einen oberhalb des Rahmens 30 angeordneten Deckel 35. Der Deckel 35 ist hier zusätzlich mit einem Tragegriff ausgestattet, um in dieser Kofferposition KP, welche insbesondere mit der Transportposition TP der Grilleinheit 20 korreliert, ein besonders einfaches und kompaktes Transportieren der Grillvorrichtung 10 zu erlauben.

In der Figur 13 ist ein erleichterter Zugang zur Heizquelle 22 dargestellt. Hier ist die Grilleinheit 20 mit einer Schublade 27 und/oder einer Öffnung 28 ausgestattet, welche einen seitlichen Zugang zur oder eine Öffnung der Heizquelle 22 erlaubt. Dies kann beispielsweise dem Befüllen mit Grillkohle, dem Anzünden der Grillkohle oder der Reinigung der Heizquelle 22 dienen.

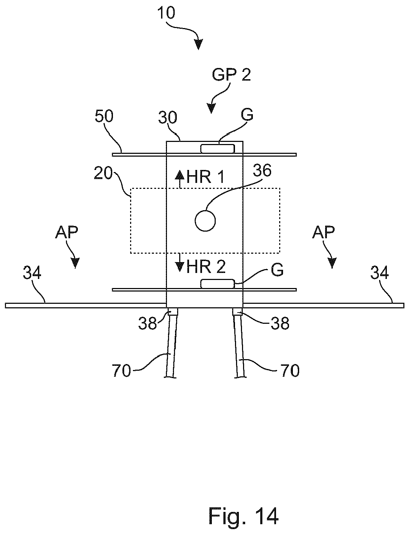

In der Figur 14 ist noch eine Variante der zweiten Grillposition GP2 dargestellt. Hier ist vorzugsweise die Heizquelle 22 so in der Grilleinheit 20 ausgebildet, dass sich auch eine zweite Heizrichtung HR2 nach unten ausbildet. So kann in der Funktion einer Oberhitze ein Grillrost 50 auch unterhalb der Grilleinheit 20 eingeschoben werden, sodass auch mit der Heizrichtung HR2 Grillgut G unterhalb der Grilleinheit 20 wie auch oberhalb der Grilleinheit 20 entlang der ersten Heizrichtung HR1 gegart werden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden.

### Bezugszeichenliste

- 10: Grillvorrichtung
- 20: Grilleinheit
- 22: Heizquelle
- 24: Auslassbereich
- 26: Halteblech
- 27: Schublade
- 28: Öffnung
- 30: Rahmen
- 31: Rotationslagerung
- 32: Aufnahmeabschnitt
- 33: Aufnahmeschiene
- 34: Seitenwand
- 35: Deckel
- 36: Handhabungsmittel
- 38: Fußaufnahme
- 40: Fixiermittel
- 42: Rastmittel
- 44: Klemmelement
- 50: Grillrost
- 60: Gegen-Haltemittel
- 62: Haltemittel
- 70: Standfuß

- G: Grillgut
- TP: Transportposition
- GP1: erste Grillposition
- GP2: zweite Grillposition
- GP3: dritte Grillposition
- GP4: vierte Grillposition
- HR1: erste Heizrichtung
- HR2: zweite Heizrichtung
- RA: Rotationsachse
- AP: Auffangposition
- KP: Kofferposition

## Patentansprüche

1. Grillvorrichtung (10) zum Grillen von Grillgut (G), aufweisend eine Grilleinheit (20) mit wenigstens eine Heizquelle (22) mit wenigstens einer Heizrichtung (HR1, HR2) und einen Rahmen (30), wobei die Grilleinheit (20) im Rahmen (30) drehbar zwischen einer ersten Grillposition (GP1) und wenigstens einer zweiten Grillposition (GP2) bewegbar gelagert ist, weiter aufweisend ein Fixiermittel (40) zum Fixieren der Grilleinheit (20) in der jeweiligen Grillposition (GP1, GP2), wobei der Rahmen (30) einen Aufnahmeabschnitt (32) mit wenigstens einer Aufnahmeschiene (33) für eine reversible Aufnahme eines Grillrostes (50) aufweist.

2. Grillvorrichtung (10) nach Anspruch 1, **dadurch gekennzeichnet, dass** die Heizquelle (22) wenigstens eine der folgenden Ausbildungen aufweist:
- Grillkohleaufnahme
- Gasbrenner
- Elektroheizer

3. Grillvorrichtung (10) nach einem der vorangehenden Ansprüche, **dadurch gekennzeichnet, dass** die erste Grillposition (GP1) senkrecht oder im Wesentlichen senkrecht zur zweiten Grillposition (GP2) ausgerichtet ist.

4. Grillvorrichtung (10) nach einem der vorangehenden Ansprüche, **dadurch gekennzeichnet, dass** die Grilleinheit (20) in wenigstens eine Transportposition (TP) bewegbar gelagert ist, welche insbesondere einer Grillposition (GP1) entspricht, in welcher die Grilleinheit (20) vollständig oder im Wesentlichen vollständig von dem Rahmen (30) umschlossen wird.

5. Grillvorrichtung (10) nach einem der vorangehenden Ansprüche, **dadurch gekennzeichnet, dass** der Rahmen (30) eine Rotationslagerung (31) für die Grilleinheit (20) aufweist für eine Ausbildung einer Rotierbarkeit der Grilleinheit (20) und eine Rotationsachse (RA).

6. Grillvorrichtung (10) nach einem der vorangehenden Ansprüche, **dadurch gekennzeichnet, dass** das Fixiermittel (40) Rastmittel (42) aufweist für ein Einrasten der Grilleinheit (20) in der jeweiligen Grillposition (GP1, GP2, GP3).

7. Grillvorrichtung (10) nach einem der vorangehenden Ansprüche, **dadurch gekennzeichnet, dass** das Fixiermittel (40) wenigstens ein Klemmelement (44) aufweist für ein Fixieren der Grilleinheit (20) in einer beliebigen oder im Wesentlichen beliebigen Zwischenposition.

8. Grillvorrichtung (10) nach einem der vorangehenden Ansprüche, **dadurch gekennzeichnet, dass** die Grilleinheit (20) auf zwei entgegengesetzt ausgerichteten Seiten Auslassbereiche (24) für den Auslass von Hitze der Heizquelle (22) entlang zweier entgegengesetzt ausgerichteter Heizrichtungen (HR1, HR2) aufweist.

9. Grillvorrichtung (10) nach einem der vorangehenden Ansprüche, **dadurch gekennzeichnet, dass** die Grilleinheit (20) ein entfernbares Halteblech (26) aufweist für ein Halten von Grillkohle in wenigstens einer der Grillpositionen (GP1, GP2, GP3).

10. Grillvorrichtung (10) nach einem der vorangehenden Ansprüche, **dadurch gekennzeichnet, dass** der Rahmen (30) und/oder die Grilleinheit (20) auf wenigstens einer Seite Gegen-Haltemittel (60) aufweist für ein reversibles Befestigen von Haltemitteln (62) für ein seitliches Halten von Grillgut (G).

11. Grillvorrichtung (10) nach einem der vorangehenden Ansprüche, **dadurch gekennzeichnet, dass** der Rahmen (30) Seitenwände (34) aufweist, welche zwischen einer die Grilleinheit (20) umschließenden Kofferposition (KP) und einer unter der Grilleinheit (20) angeordneten Auffangposition (AP) bewegbar gelagert sind.

12. Grillvorrichtung (10) nach einem der vorangehenden Ansprüche, **dadurch gekennzeichnet, dass** am Rahmen (30) wenigstens ein Handhabungsmittel (36) angeordnet ist für eine Unterstützung der Handhabung für die Bewegung der Grilleinheit (20) zwischen den Grillpositionen (GP1, GP2, GP3).

13. Grillvorrichtung (10) nach einem der vorangehenden Ansprüche, **dadurch gekennzeichnet, dass** der Rahmen (30) Fußaufnahmen (38) aufweist für ein reversibles Aufnahmen von Standfüßen (70).

14. Grillvorrichtung (10) nach einem der vorangehenden Ansprüche, **dadurch gekennzeichnet, dass** die Grilleinheit (20) an einer seitlichen Stirnfläche eine Schublade (27) und/oder eine Öffnung (28) aufweist für einen erleichterten Zugang zu Heizquelle (22).

15. Grillvorrichtung (10) nach einem der vorangehenden Ansprüche, **dadurch gekennzeichnet, dass** der Rahmen (30) einen Deckel (35) aufweist, welcher reversibel luftdicht oder im Wesentlichen luftdicht den Rahmen (30) abschließt.

16. Grillvorrichtung (10) nach einem der vorangehenden Ansprüche, **dadurch gekennzeichnet, dass** in wenigstens einer Grillposition (GP1, GP2, GP3) unterhalb und oberhalb der Grilleinheit (20) Aufnahmeschienen (33) für die reversible Aufnahme von Grillrosten (50) ausgebildet sind.

17. Verfahren für einen Wechsel einer Grillposition (GP1, GP2, GP3) bei einer Grillvorrichtung (10) mit den Merkmalen eines der Ansprüche 1 bis 16, aufweisend die folgenden Schritte:
- Lösen der Fixierung der Grilleinheit (20) mittels des Fixiermittels (40),
- Bewegen der Grilleinheit (20) in eine andere Grillposition (GP1, GP2, GP3),
- Ausbilden der Fixierung der Grilleinheit (20) in der anderen Grillposition (GP1, GP2, GP3) mittels des Fixiermittels (40).
